# EUROPEAN PATENT SPECIFICATION

(11) **EP 1 741 964 B1**
(45) Date of publication and mention of the grant of the patent: **01.07.2015**
(21) Application number: 06013747.8
(22) Date of filing: 03.07.2006
(51) Int. Cl.: F16H 63/06, F16H 55/56

(54) **Vehicle power unit and vehicle comprising such a vehicle power unit**
Fahrzeugantrieb und Fahrzeug umfassend einen solchen Fahrzeugantrieb
Propulsion de véhicule et véhicule comprenant une telle propulsion

(30) Priority: 04.07.2005 JP 2005194746
(43) Date of publication of application: 10.01.2007
(73) Proprietor: Yamaha Hatsudoki Kabushiki Kaisha, Iwata-shi, Shizuoka 438-8501 (JP)
(72) Inventor: Sugitani, Tsuyoshi, Iwata-shi Shizuoka-ken 438-8501 (JP)
(74) Representative: Grünecker Patent- und Rechtsanwälte PartG mbB

(56) References cited:
- EP-A- 1 312 832
- JP-A- 2005 133 929
- US-A1- 2004 102 267

## Description

The present invention relates to a vehicle power unit comprising a continuously variable transmission having a transmission belt wound around a primary sheave and a secondary sheave, and a wound diameter control mechanism that varies a belt wound diameter of the primary sheave by means of an electric motor. A vehicle power unit according to the preamble of claim 1 is known from US 2004/102267 A1.

For example, some latest scooter type motorcycles have a vehicle power unit mounted thereon comprising a V-belt type continuously variable transmission made integral with an engine, and a wound diameter control mechanism that varies a belt wound diameter of a primary sheave of the continuously variable transmission between a low position and a top position on the basis of engine speed, vehicle speed, etc.

For this kind of power unit, for example, Patent Specification No. JP 2950957 B2, adopts a construction, in which a moving sheave member (5) of a primary sheave (2) is arranged on a primary shaft (1) to be able to move axially, a moving side feed screw member (6) is mounted rotatably on the moving sheave member (5) with a bearing (7) therebetween, a stationary side feed screw member (10) meshing with the moving side feed screw member (6) is fixed to a casing (9), and the primary shaft (1) is supported on the casing (9) with a bearing (8) therebetween.

By the way, the conventional power unit described above involves a problem that in order to ensure an axial shift of the moving sheave member (5), it is necessary to lengthen the primary shaft (1) corresponding to the bearing (8) with the result that the power unit becomes large in width dimension. In case of mounting such large-width power unit on, for example, a motorcycle, there is a fear of influences on a bank angle and the foot putting quality.

The invention has been thought of in view of the conventional situation described above and has its object to provide a vehicle power unit, a primary shaft can of which be decreased in axial length.

This objective is solved in an inventive manner by a vehicle power unit according to claim 1. Disclosed herein is a vehicle power unit comprising a belt-type continuously variable transmission having a mechanism to control a belt wound diameter, said mechanism comprising a slide cylindrical body mounted on a moving sheave member of a primary sheave and supported slidably on a primary shaft, a moving side feed screw member supported rotatably through a first bearing by the slide cylindrical body, a stationary side feed screw member meshing with the moving side feed screw member and latched on a transmission casing, and a second bearing arranged between the stationary side feed screw member and the primary shaft to provide a space therebetween, into which the slide cylindrical body in a low position of the moving sheave member can enter.

Preferably, the second bearing is arranged so as to axially overlap an end of the slide cylindrical body opposite to the moving sheave member, when the moving sheave member is disposed in the low position.

Further, preferably the continuously variable transmission comprises the primary sheave mounted on the primary shaft, into which output of an engine is input, a secondary sheave mounted on a secondary shaft, from which a drive force is taken out, and a transmission belt wound around the primary sheave and the secondary sheave, wherein the wound diameter control mechanism is configured to convert torque from an actuator into an axially moving force of the moving sheave member, which constitutes part of the primary sheave, to vary the belt wound diameter of the primary sheave,.

The second bearing is supported on the primary shaft with a bearing support member therebetween, and the bearing support member comprises a cylindrical-shaped holding portion, which holds the second bearing, and a flange portion, which defines a bottom wall of the holding portion, wherein the holding portion axially overlaps the opposite end of the slide cylindrical body to the moving sheave member when the moving sheave member is disposed in the low position, and wherein the flange portion is supported by the primary shaft.

Yet further, preferably the flange portion is interposed between a step formed on the primary shaft portion and a collar member, which is arranged between the primary portion and the slide cylindrical body. Therein, the flange portion of the bearing support member may be press fitted onto and joined to the step.

Preferably, the moving side feed screw member has an inner peripheral surface of a cylindrical body thereof supported by the first bearing and is formed on an outer peripheral surface thereof with male threads, and at least a part of the male threads axially overlaps the first bearing.

Further, preferably a sheave side gear, to which torque from the actuator is transmitted, is press fitted onto and joined to a portion of the moving side feed screw member adjacent to the male threads and the sheave side gear axially overlaps at least a part of the male threads.

A vehicle power unit disclosed herein comprises a belt-type continuously variable transmission having a mechanism to control a belt wound diameter, said mechanism comprising a slide cylindrical body mounted on a moving sheave member of a primary sheave and supported slidably on a primary shaft, a moving side feed screw member supported rotatably through a first bearing by the slide cylindrical body, a stationary side feed screw member meshing with the moving side feed screw member and latched on a transmission casing, and a second bearing arranged between the stationary side feed screw member and the primary shaft, wherein the moving side feed screw member has an inner peripheral surface of a cylindrical body thereof supported by the first bearing and is formed on an outer peripheral surface thereof with male threads, and at least a part of the male threads axially overlaps the first bearing.

A continuously variable transmission disclosed herein comprises the primary sheave mounted on the primary shaft, into which output of an engine is input, the secondary sheave mounted on the secondary shaft, from which a drive force is taken out, and a transmission belt wound around the primary sheave and the secondary sheave, wherein the wound diameter control mechanism is configured to convert torque from an actuator into an axially moving force of the moving sheave member, which constitutes part of the primary sheave, to vary the belt wound diameter of the primary sheave, wherein the wound diameter control mechanism comprises the slide cylindrical body mounted on the moving sheave member of the primary sheave and supported slidably on the primary shaft, the moving side feed screw member supported rotatably on the slide cylindrical body with a first bearing therebeween, the stationary side feed screw member meshing with the moving side feed screw member and being latched on a transmission casing body, and wherein the moving side feed screw member has the inner peripheral surface of the cylindrical body thereof supported by the first bearing and is formed on the outer peripheral surface thereof with the male threads, and wherein at least a part of the male threads axially overlaps the first bearing.

Further, preferably a sheave side gear, to which torque from the actuator is transmitted, is press fitted onto and joined to a portion of the moving side feed screw member adjacent to the male threads and the sheave side gear axially overlaps at least a part of the male threads.

Further, the vehicle comprises a power unit according to the features of one of the embodiments discussed above.

In the following, the present invention is explained in greater detail with respect to several embodiments thereof in conjunction with the accompanying drawings, wherein:
- Fig. 1: is a side view showing a motorcycle on which a power unit according to an embodiment is mounted,
- Fig. 2: is a side view showing the power unit,
- Fig. 3: is a plan view showing the power unit,
- Fig. 4: is a side view showing the power unit,
- Fig. 5: is a cross sectional view (a cross sectional view taken along the line V-V in Fig. 4) showing surroundings of a primary sheave of the power unit,
- Fig. 6: is a cross sectional view (a cross sectional view taken along the line VI-VI in Fig. 4) showing surroundings of a secondary sheave of the power unit,
- Fig.7: is an enlarged cross sectional view showing a wound diameter control mechanism of the power unit,
- Fig. 8: is a cross sectional view taken along the line VIII-VIII in Fig. 4, and
- Fig. 9: is a cross sectional view taken along the line IX-IX in Fig. 4.

### Description of Reference Numerals and Signs:

- 6:: power unit
- 7:: rear wheel (drive wheel)
- 14:: engine
- 15:: continuously variable transmission
- 16:: wound diameter control mechanism
- 17b:: primary shaft portion
- 17d:: step
- 40:: primary sheave
- 41:: secondary shaft
- 42:: secondary sheave
- 43:: transmission belt
- 48:: collar member
- 49:: moving sheave
- 50:: stationary sheave
- 60:: electric motor
- 61:: sheave side gear
- 80:: slide cylindrical body
- 81:: first bearing
- 82:: moving side feed screw member
- 82a:: male threads
- 83:: stationary side feed screw member
- 83a:: female threads
- 84:: centering bearing (second bearing)
- 90:: bearing support member
- 90a:: holding portion
- 90b:: flange portion

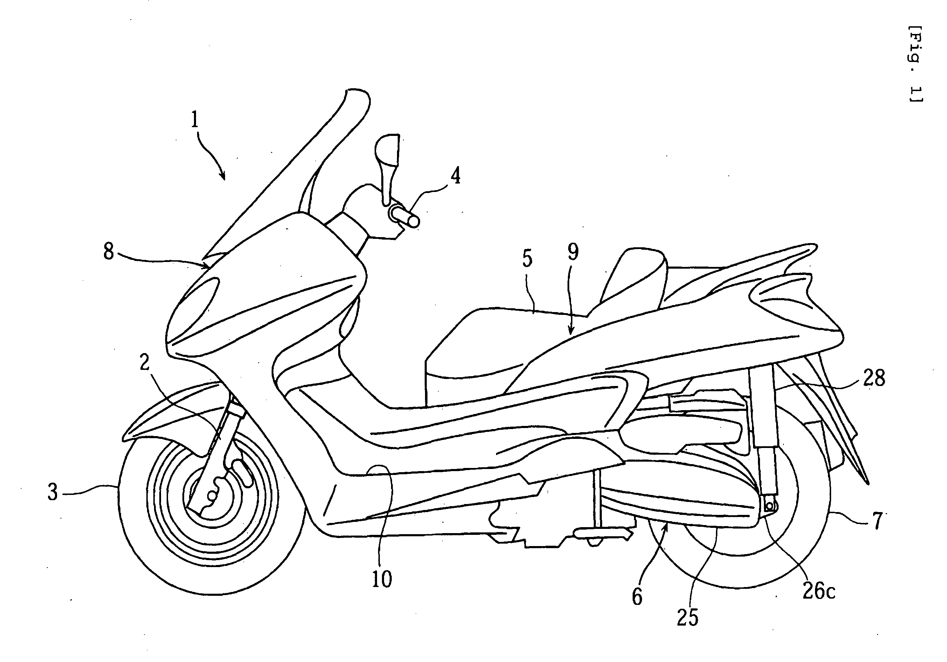

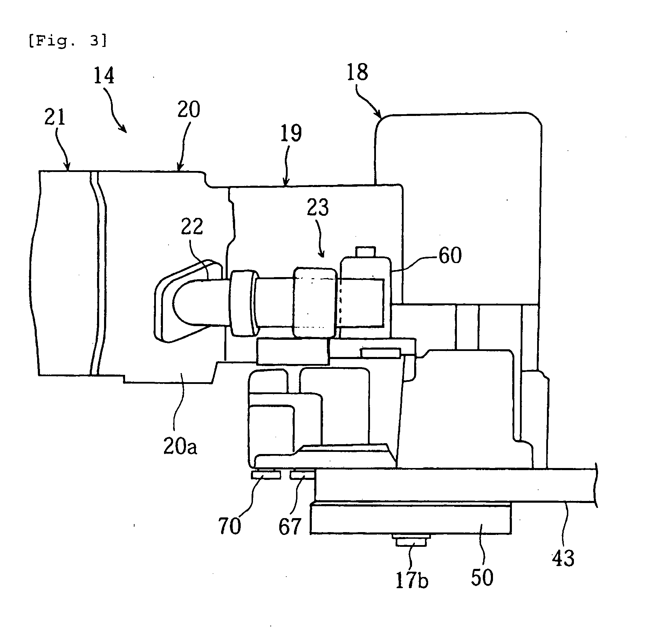

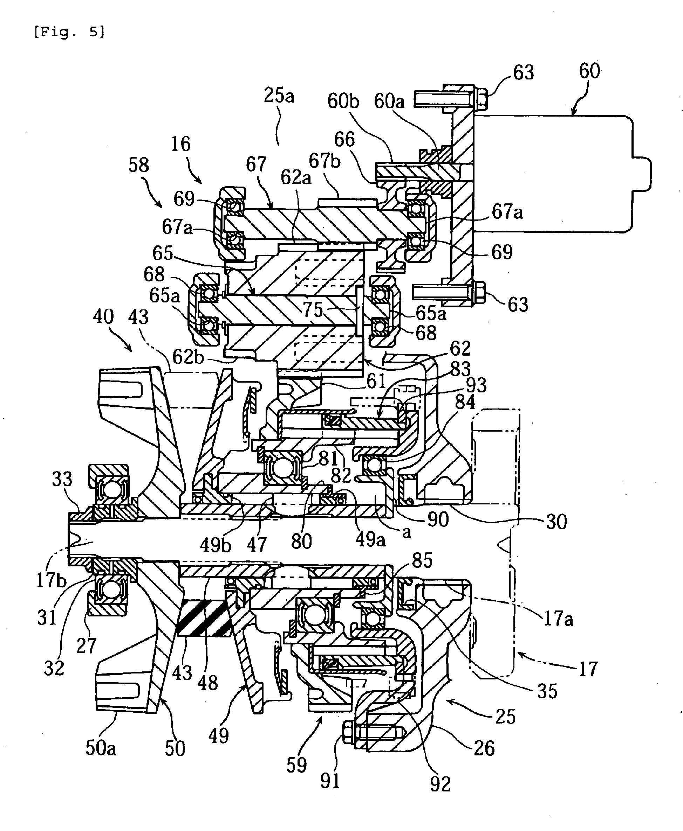

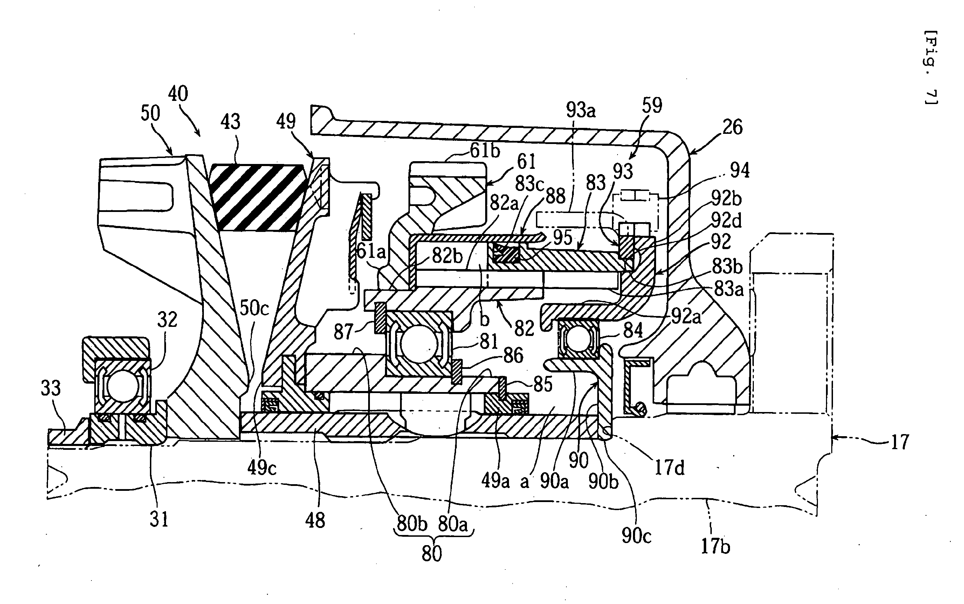

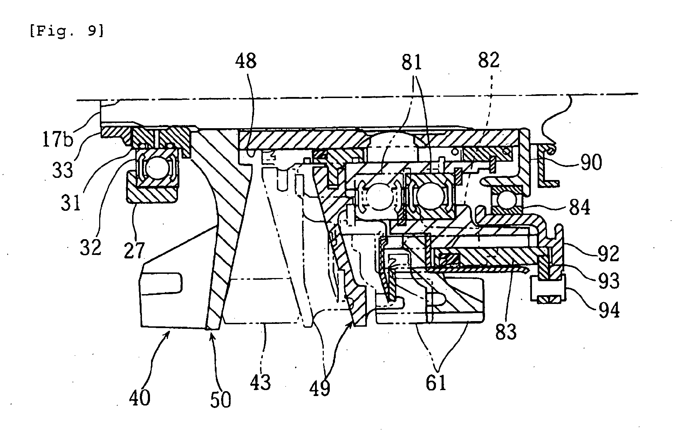

Figs. 1 to 9 are views illustrating a vehicle power unit according to an embodiment. The embodiment will be described with respect to the case of a power unit for scooter type motorcycles. In addition, front and rear, and left and right referred to in the embodiment mean front and rear, and left and right in a state of being seated on a seat.

In the drawings, the reference numeral 1 denotes a scooter type motorcycle having the following schematic construction. A front fork 2 is pivotally mounted on a head pipe of an underbone type vehicle frame (not shown), the front fork 2 having a front wheel 3 arranged at a lower end thereof and a steering handle 4 arranged at an upper end thereof. Also, a seat 5 is mounted centrally of the vehicle frame, a unit swing type power unit 6 is mounted below the seat 5 of the vehicle frame to be able to swing vertically, and a rear wheel 7 is arranged on a rear end of the power unit 6.

A periphery of the front fork 2 is covered by a front cover 8, and a periphery of a lower portion of the seat 5 is covered by a side cover 9. Left and right step boards 10, 10 are arranged between the front cover 8 and the side cover 9.

The power unit 6 comprises an engine 14, a continuously variable transmission 15 that transmits a motive power of the engine 14 to the rear wheel 7, and a wound diameter control mechanism 16 that variably controls a belt wound diameter of the continuously variable transmission 15.

The engine 14 is a water-cooled type 4-cycle single cylinder engine mounted with a cylinder axis greatly inclined forward, in which a cylinder block 19 and a cylinder head 20 are joined to a front mating surface of a crankcase 18, in which a crankshaft 17 is accommodated, and a head cover 21 is mounted to the cylinder head 20.

An intake pipe 22 communicated to an intake port (not shown) is connected to an upper wall portion 20a of the cylinder head 20. The intake pipe 22 is bent and extended toward a vehicle rear part from the upper wall portion 20a, and a throttle body 23 is connected to a rear end of the intake pipe 22. The throttle body 23 is arranged to be positioned above the cylinder block 19.

The continuously variable transmission 15 is accommodated in a transmission casing 25, which is provided to extend toward the vehicle rear part from a left side of the crankcase 18. The transmission casing 25 comprises a casing body 26 formed integral with the crankcase 18 to extend to the rear wheel 7, and a casing cover 27 mounted detachably to a left mating surface of the casing body 26. Mounted to an outside of the casing cover 27 is an air introduction cover (not shown) that introduces traveling wind into the transmission casing 25.

A suspending portion 26a projecting downward is formed integral with a front lower wall portion of the casing body 26. A front boss 26b extending forward is formed on the suspending portion 26a, the front boss 26b being supported pivotally on the vehicle frame by a pivot (not shown). Also, the suspending portion 26a has an oil filter 29 mounted thereon.

A rear boss 26c extending rearward is formed integral with a rear end wall of the casing body 26, the rear boss 26c connecting to a lower end of a rear cushion unit 28 connected to the vehicle frame.

The crankshaft 17 is supported on the crankcase 18 through bearings 30, 30, which are arranged on left and right journal portions 17a, 17a, and a sealing member 35 is provided for sealing between the journal portion 17a and the crankcase 18.

A primary shaft portion 17b is formed integral with a left end of the crankshaft 17 to project leftward from the left journal portion 17a, the primary shaft portion 17b being positioned in the transmission casing 25.

A left end of the primary shaft portion 17b is supported through a spacer 31 and a bearing 32 by the casing cover 27.

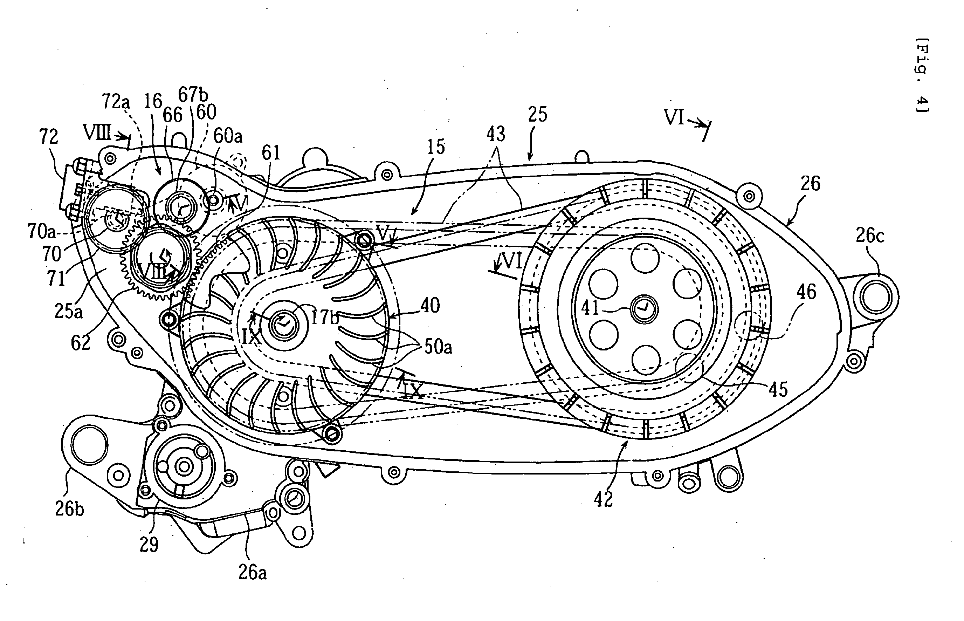

The continuously variable transmission 15 comprises a primary sheave 40 mounted on the primary shaft portion 17b, into which output of the engine 14 is input, a secondary sheave 42 mounted on a secondary shaft 41, from which output to the rear wheel (drive wheel) 7 is taken out, and a transmission belt 43 made of rubber or a resin and wound around the primary sheave 40 and the secondary sheave 42. Here, in Figs. 4 to 6, solid lines indicate a low position of the transmission belt 43 and two-dot chain lines indicate a top position thereof.

The primary sheave 40 comprises a cylindrical-shaped collar member 48 spline-fitted onto the primary shaft portion 17b so as to rotate therewith, a moving sheave 49 mounted on the collar member 48 so as to be able to move axially and to rotate with the collar member 48, and a stationary sheave 50 spline-fitted onto the primary shaft portion 17b so as to abut against a left end of the collar member 48, and fixed by a lock nut 33 to be axially immovable.

The moving sheave 49 comprises a cylindrical body 49a mounted on the collar member 48, the cylindrical body 49a having an axially extending slit 49b formed thereon. A key 47 inserted into the slit 49b is fitted into the collar member 48 whereby the moving sheave 49 is made axially movable and adapted to rotate with the collar member 48.

Also, formed integrally on an outer surface of the stationary sheave 50 are a multiplicity of radially extending cooling fans 50a at predetermined intervals in a circumferential direction. The cooling fans 50a introduce cooling wind into the transmission casing 25.

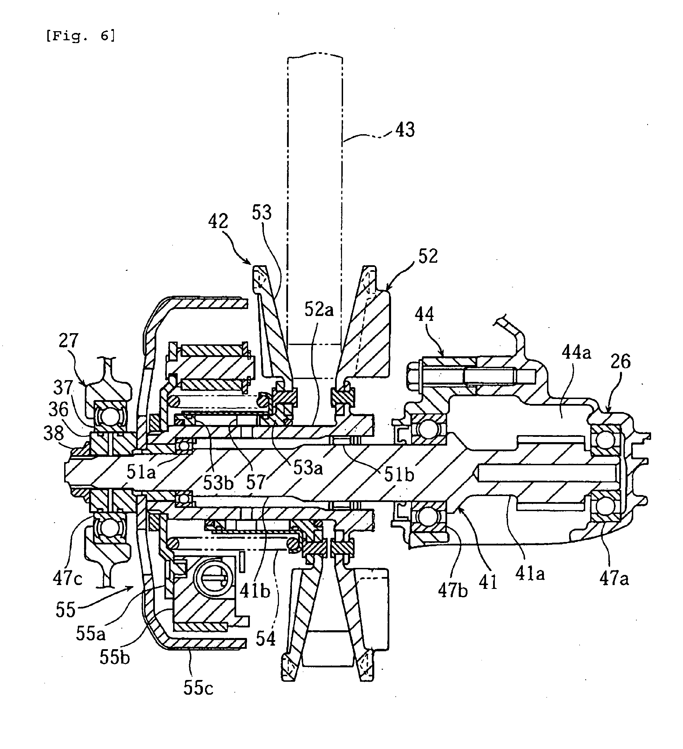

An independent oil chamber 44a is formed on a rear end of the transmission casing 25 by the casing body 26 and a gear casing 44. A right half 41 a of the secondary shaft 41 is inserted into the oil chamber 44a, and a main shaft 45 and a drive shaft 46 are arranged in parallel to the right half 41 a (see Figs. 4 and 6). The rear wheel 7 is mounted on the portion of the drive shaft 46 which projects from the casing body 26.

The right half 41 a of the secondary shaft 41 is supported through bearings 47a, 47b by the casing body 26 and the gear casing 44, respectively. Also, a left end of the secondary shaft 41 is supported through a spacer 36 and a bearing 37 by the casing cover 27.

The secondary sheave 42 comprises a stationary sheave 52 mounted on a left half 41 b of the secondary shaft 41 with left and right bearings 51 a, 51 b therebetween to be able to rotate and to be unable to move axially, and a moving sheave 53 mounted on the stationary sheave 52 to be able to move axially and to rotate with the stationary sheave 52.

The stationary sheave 52 comprises a cylindrical-shaped collar portion 52a mounted on the secondary shaft 41. Also, the moving sheave 53 comprises a cylindrical-shaped cylindrical body 53a mounted on the collar portion 52a, the cylindrical body 53a having an axially extending slit 53b formed thereon. A key 57 inserted into the slit 53b is fixed to the collar portion 52a whereby the moving sheave 53 is made axially movable and adapted to rotate with the collar portion 52a.

The moving sheave 53 is biased in a direction, in which the secondary sheave 42 is increased in effective diameter, by a spring 54 arranged between the moving sheave 53 and a weight arm 55a described later.

A centrifugal type clutch 55 is interposed between the collar portion 52a on the left of the secondary sheave 42 and the secondary shaft 41. The centrifugal type clutch 55 is constructed such that the weight arm 55a is fitted onto and fixed to the collar portion 52a so as to rotate with the collar portion 52a, a weight 55b is mounted on the weight arm 55a to be able to swing about an axis which is parallel to the secondary shaft 41 in a radial direction, and a substantially bowl-shaped outer clutch 55c surrounding the weight 55b externally is fitted and fixed so as to rotate with the secondary shaft 41.

As the secondary sheave 42 is increased in rotational speed, the weight 55b is moved radially outward by a centrifugal force to abut against an inner surface of the outer clutch 55c whereby rotation of the secondary sheave 42 is transmitted to the secondary shaft 41. Rotation of the secondary shaft 41 is transmitted to the rear wheel 7 through the main shaft 45 and the drive shaft 46.

The wound diameter control mechanism 16 is arranged in a wound diameter control chamber 25a expanded and formed obliquely upward at a front end of the transmission casing 25. The wound diameter control mechanism 16 converts torque from an electric motor (actuator) 60 into an axially moving force of the moving sheave 49 of the primary sheave 40 to thereby automatically and variably control a belt wound diameter of the primary sheave 40 between a low position and a top position. Rotation of the electric motor 60 is controlled on the basis of engine speed, vehicle speed, etc. by a controller (not shown). In addition, the actuator is not limited to an electric motor but may be, for example, a hydraulic motor.

The wound diameter control mechanism 16 comprises a rotation transmission gear portion 58, which transmits torque from the electric motor 60 to a sheave side gear 61 on a side of the moving sheave 49, and an axial conversion gear portion 59, which converts torque of the sheave side gear 61 into an axially moving force of the moving sheave 49.

The rotation transmission gear portion 58 comprises the sheave side gear 61, a motor side gear 62, which meshes with the sheave side gear 61, a reduction large gear 66 and a reduction small gear 67b, which reduce rotation of the electric motor 60 to transmit the same to the motor side gear 62, and details of the construction is as follows.

The electric motor 60 is arranged outside the casing body 26 and between the cylinder block 19 and the throttle body 23, and fixed to an outer side wall of the casing body 26 by means of a plurality of bolts 63. An output gear 60b formed on a rotating shaft 60a of the electric motor 60 extends through the casing body 26 to project into the wound diameter control chamber 25a.

The reduction large gear 66 meshes with the output gear 60b and is press fitted onto and fixed to a reduction gear shaft 67. Also, the reduction small gear 67b is formed integral with the reduction gear shaft 67 to mesh with the motor side gear 62.

The motor side gear 62 is mounted on a motor side gear shaft 65. The motor side gear 62 is caused by a pin 75, which is inserted radially into the motor side gear shaft 65, to rotate with the motor side gear shaft 65.

Both ends 65a, 67a of the motor side gear shaft 65 and the reduction gear shaft 67 are formed to be smaller in diameter than central portions thereof, and the both ends 65a, 67a are supported through bearings 68, 69 by the transmission casing 25 to be made axially immovable.

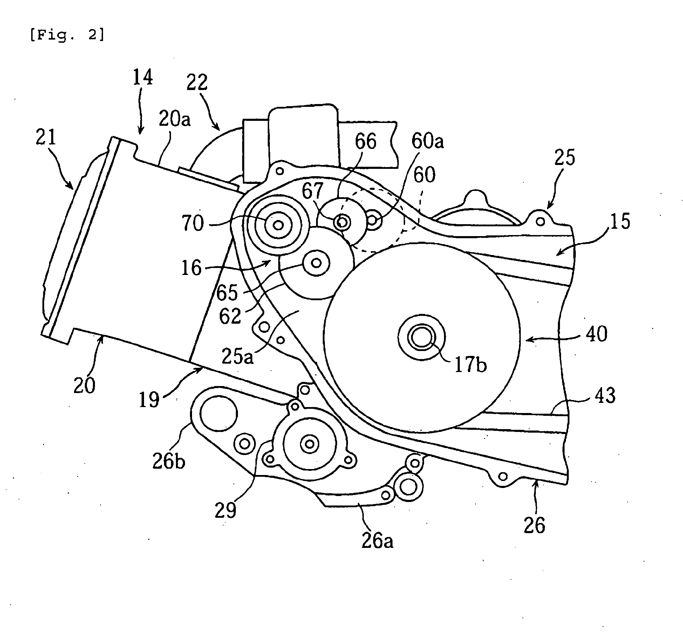

As viewed from laterally of the vehicle, the rotating shaft 60a of the electric motor 60, the reduction gear shaft 67, and the motor side gear shaft 65 are arranged on an arc centering on the primary shaft portion 17b and along an outer periphery of the primary sheave 40 (see Figs. 2 and 4).

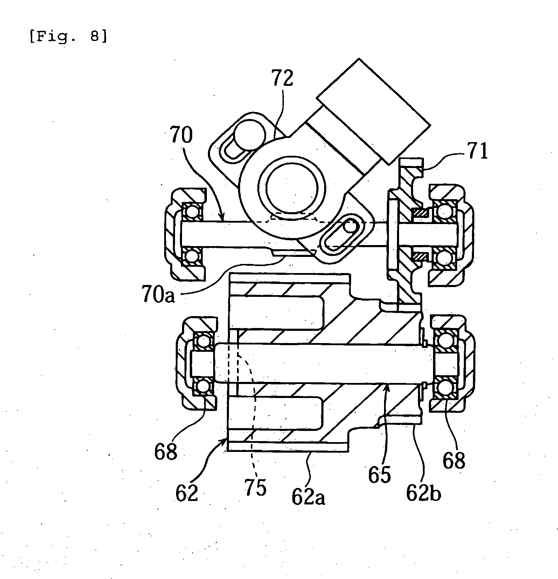

Also, a sensor shaft 70 is arranged forwardly of the motor side gear shaft 65, and a sensor drive gear 62b formed at an end of the motor side gear 62 meshes with a sensor gear 71 mounted on the sensor shaft 70. A detection gear 70a is formed on the sensor shaft 70. A rotational frequency sensor 72 is arranged on that portion of a front end wall of the transmission casing 25, which faces the detection gear 70a, and the detection gear 70a meshes with an input gear 72a of the rotational frequency sensor 72. Thus, a state of rotation of the electric motor 60 and hence an axially moved position of the moving sheave 49 are detected (see Figs. 4 and 8).

The motor side gear 62 is made of a resin to comprise a large diameter gear portion 62a, which meshes with the reduction small gear 67b, and a small diameter gear portion 62b, which meshes with the sensor gear 71.

The large diameter gear portion 62a of the motor side gear 62, the sheave side gear 61, and the reduction small gear 67b comprise a helical gear. Respective teeth of the helical gear twist obliquely relative to an axis and a magnitude of a thrust force, which biases the sheave side gear 61 to a top side, is set according to setting of an angle of twist of the respective teeth. In this manner, rotation of the electric motor 60 is reduced in speed by the reduction large gear 66 and the reduction small gear 67b to be transmitted to the motor side gear 62 to be transmitted to the sheave side gear 61 owing to rotation of the motor side gear 62, and at this time, a thrust force, which biases the sheave side gear 61 and hence the moving sheave 49 to a top side, is generated. Also, a thrust reaction force acting on the motor side gear 62 is transmitted to the motor side gear shaft 65 through the pin 75 from the motor side gear 62.

Hereupon, a reduction spur gear separate from the motor side gear 62 may be mounted on the motor side gear shaft 65 and a spur gear on a side of the electric motor 60 may mesh with the reduction spur gear. In this case, only the motor side gear 62 and the sheave side gear 61 comprise a helical gear.

The axial conversion gear portion 59 comprises a slide cylindrical body 80 mounted on the cylindrical body 49a fixed to the moving sheave 49, a moving side feed screw member 82 supported rotatably through a first bearing 81 by the slide cylindrical body 80, a stationary side feed screw member 83 meshing with the moving side feed screw member 82 and latched on the casing body 26, and a centering bearing (second bearing) 84 arranged between the stationary side feed screw member 83 and the primary shaft portion 17b, and details of the construction is as follows.

The slide cylindrical body 80 is fixed to the cylindrical body 49a of the moving sheave 49 by a circlip 85 so as to be axially immovable and to rotate with the moving sheave 49.

The slide cylindrical body 80 comprises a large diameter portion 80b being a left half thereof, and a small diameter portion 80a being a right half thereof and formed to be stepped relative to the large diameter portion 80b. The first bearing 81 is press fitted onto the small diameter portion 80a, the first bearing 81 being made axially immovable relative to the slide cylindrical body 80 by a circlip 86.

The moving side feed screw member 82 is cylindrical in shape, and the first bearing 81 is press fitted into and fixed to a left portion of an inner peripheral surface of the moving side feed screw member 82 to be made axially immovable by a circlip 87. Thereby, the moving side feed screw member 82 is supported rotatably through the first bearing 81 by the slide cylindrical body 80.

A boss 82b is formed on a left end of an outer peripheral surface of the moving side feed screw member 82 and male threads 82a are formed on the remainder of the outer peripheral surface. The sheave side gear 61 is press fitted onto and fixed to the boss 82b with a plate cover 88 therebetween. The sheave side gear 61 is press fitted onto the boss 82b with a fitting force, which can transmit torque of a value a little larger than a maximum torque value of the electric motor 60, for example, 1.1 times the maximum torque value. Thereby, for example, in the case where an excessive torque is applied to the sheave side gear 61 due to some reasons such as seizure of the first bearing 81, etc., the sheave side gear 61 rotates relative to the moving side feed screw member 82 and thus functions as a so-called torque limiter.

The sheave side gear 61 axially overlaps the first bearing 81 and axially overlaps the boss 82b of the moving side feed screw member 82 and a left half of the male threads 82a. Specifically, the sheave side gear 61 comprises an annular press fitting portion 61 a and a gear portion 61 b formed to be offset toward the engine from the press fitting portion 61 a, the gear portion 61 b overlapping the male threads 82a over a substantially whole width thereof. In addition, since the sheave side gear 61 and the moving side feed screw member 82 are made separate from each other, working of the male threads 82a is made possible.

The centering bearing 84 serves to center the moving side and stationary side feed screw members 82, 83, and is supported through a bearing support member 90 on the primary shaft portion 17b.

The bearing support member 90 comprises a cylindrical-shaped holding portion 90a opened outward and a disk-shaped flange portion 90b defining a bottom wall of the holding portion 90a, and a through-hole 90c is formed on the flange portion 90b to permit insertion of the primary shaft portion 17b therethrough. The holding portion 90a is formed to be positioned a little radially inwardly of an outer peripheral edge of the flange portion 90b.

The centering bearing 84 is press fitted onto and joined to an outer peripheral surface of the holding portion 90a of the bearing support member 90. The centering bearing 84 is arranged so as to axially overlap a part of the small diameter portion 80a of the slide cylindrical body 80 when the moving sheave 49 is disposed in a low position. More specifically, formed between the collar member 48 and the holding portion 90a of the bearing support member 90 is a space a, into which the cylindrical body 49a of the moving sheave 49 in a low position and an end of the slide cylindrical body 80 can enter.

The flange portion 90b engages with a step 17d formed on the primary shaft portion 17b to be interposed by the step 17d and an inner end surface of the collar member 48 to be made axially immovable thereby. Specifically, the primary shaft portion 17b is inserted into the through-hole 90c of the flange portion 90b to have the step 17d abut against the flange portion 90b, the collar member 48 is mounted on the primary shaft portion 17b to have the inner end surface of the collar member 48 abut against the flange portion 90b, and the stationary sheave 50 and the spacer 31 are then mounted, and the lock nut 33 is clamped. Thereby, the bearing support member 90 together with the collar member 48, the stationary sheave 50, and the spacer 31 is clamped and fixed to the primary shaft portion 17b.

Fixed to the casing body 26 by a bolt 91 is a substantially annular stationary side support member 92 to support the stationary side feed screw member 83. The stationary side support member 92 comprises an inner cylindrical portion 92a formed so as to surround the holding portion 90a, and a flange portion 92b extending radially outward following the inner cylindrical portion 92a.

The centering bearing 84 is fitted into and joined to an inner peripheral surface of the inner cylindrical portion 92a, and the stationary side support member 92 is supported coaxially on the bearing support member 90 and hence the primary shaft portion 17b through the centering bearing 84.

An annular step 92d is formed on an outer periphery of the flange portion 92b. A right end 83b of the stationary side feed screw member 83 is fitted onto the step 92d. A support plate 93 is joined to the right end 83b, and the stationary side feed screw member 83 is fixed to the stationary side support member 92 by clamping and fixing the support plate 93 to the flange portion 92b by means of a clamping member 94.

The stationary side feed screw member 83 is cylindrical in shape and female threads 83a are formed on an inner peripheral surface thereof to threadedly engage with the male threads 82a of the moving side feed screw member 82.

Also, an annular sealing groove 83c is formed on an outer peripheral surface of the stationary side feed screw member 83, and a sealing member 95 is mounted in the sealing groove 83c to slidingly contact with an inner peripheral surface of the plate cover 88. A region surrounded by the plate cover 88 and the stationary and moving side feed screw members 83, 82 defines a storage chamber b that stores a lubricant for meshing portions of the male threads 82a and the female threads 83a.

A low-side stopper portion 93a is bent and formed on an outer edge of the support plate 93 so as to be opposed to the sheave side gear 61. A low position of the moving sheave 49 is restricted by having the sheave side gear 61 abut against the low-side stopper portion 93a.

Also, flat top-side stopper surfaces 49c, 50c are formed on mutually facing inner bases of the moving sheave 49 and the stationary sheave 50 of the primary sheave 40 by means of machining. The stopper surfaces 49c, 50c are set to form a clearance of about 2 mm therebetween in the case where the transmission belt 43 is disposed in a top position when the vehicle is new with a travel distance being substantially zero. When the transmission belt 43 wears as a travel distance is increased, the stopper surfaces 49c, 50c abut against each other to thereby restrict a top position of the moving sheave 49.

When an engine speed increases in accordance with an accelerator operation, rotation of the electric motor 60 is controlled to present a preset belt wound diameter according to the engine speed. Rotation of the electric motor 60 is transmitted to the motor side gear 62 through the reduction large gear 66 and the reduction small gear 67b, and further to the sheave side gear 61 from the motor side gear 62. When the sheave side gear 61 rotates, the moving side feed screw member 82 together with the sheave side gear 61 axially moves a distance corresponding to an amount of rotation of the electric motor 60. In keeping with this, the moving sheave 49 moves a predetermined amount toward a top side, so that the primary sheave 40 attains the set belt wound diameter. In this case, since the motor side gear 62 and the sheave side gear 61 comprise a helical gear, there is generated a thrust force that biases the moving sheave 49 to a top side.

In this manner, according to the embodiment, since the centering bearing 84 arranged between the stationary side feed screw member 83 and the primary shaft portion 17b is arranged to axially overlap the small diameter portion 80a of the slide cylindrical body 80 on an opposite side to the moving sheave when the moving sheave 49 is disposed in a low position, the moving sheave 49 can be moved to a position, in which the slide cylindrical body 80 axially overlaps the centering bearing 84, and it is possible to correspondingly decrease an axial length of the primary shaft portion 17b and hence a vehicle width dimension of the power unit 6. Consequently, it is possible to ensure a bank angle and to heighten a foot putting quality. Incidentally, it is possible according to the embodiment to decrease an axial dimension of the primary shaft portion 17b substantially to around a width of the bearing 84.

According to the embodiment, the centering bearing 84 is supported by the bearing support member 90, the bearing support member 90 comprises the holding portion 90a, which holds the bearing 84 on an outer peripheral surface thereof, and the flange portion 90b defining the bottom wall of the holding portion 90a, and the flange portion 90b is supported by the primary shaft portion 17b, so that the space a, into which the slide cylindrical body 80 of the moving sheave 49 in a low position can enter, is formed between the holding portion 90a and the collar member 48 to enable realizing the arrangement of the moving sheave 49 to the engine in a simple construction.

According to the embodiment, the inner peripheral surface of the moving side feed screw member 82 is supported by the first bearing 81, the male threads 82a are formed on the outer peripheral surface of the moving side feed screw member, and the left half of the male threads 82a of the moving side feed screw member 82 axially overlaps the first bearing 81, so that it is possible to decrease an axial length of the moving side feed screw member 82 as compared with, for example, the case where both the bearing and the threads are arranged on an inner peripheral surface of the moving side feed screw member, and it is possible to further decrease a vehicle width dimension of the power unit 6. In this case, since the moving side feed screw member 82 is arranged inside and the stationary side feed screw member 83 is arranged outside, it is possible to realize making the vehicle width dimension compact. Supposing that the moving side feed screw member is arranged outside and the stationary side feed screw member is arranged inside, both the bearing and the threads will be arranged in parallel on the inner peripheral surface of the moving side feed screw member, so that the vehicle width dimension will be increased.

According to the embodiment, since the sheave side gear 61 is press fitted onto the boss 82b at the left end of the moving side feed screw member 82 and the gear portion 61 b is arranged to axially overlap the male threads 82a, it is possible to decrease the axial dimension as compared with, for example, the case where the moving side feed screw member and the sheave side gear are arranged in parallel to each other in the axial direction. In this case, by working the male threads 82a before press-fitting the sheave side gear 61, the sheave side gear 61 does not become an obstacle to working of the male threads 82a while the sheave side gear 61 is constructed to axially overlap the male threads 82a.

According to the embodiment, the flange portion 90b is interposed between the step 17d formed on the primary shaft portion 17b and the inner end surface of the collar member 48 mounted on the primary shaft portion 17b, and the stationary sheave 50 mounted on the primary shaft portion 17b is interposed to fix the flange portion 90b, the collar member 48, and the stationary sheave 50 by the lock nut 33 to make them axially immovable, so that it is possible to fix the bearing support member 90 to the primary shaft portion 17b making effective use of the existing parts 48, 50, 33, thus enabling avoiding an increase in the number of parts.

Also, since the flange portion 90b is caused to abut against the step 17d of the primary shaft portion 17b, it is possible to surely prevent axial movements of the bearing support member 90.

Since the embodiment is constructed such that the bearing 81 is fixed to the slide cylindrical body 80, which is fixed to the moving sheave 49, by the circlip 86 so as to be axially immovable, the moving side feed screw member 82 is fixed to the bearing 81 by the circlip 87 so as to be axially immovable, and the sheave side gear 61 is press fitted onto the moving side feed screw member 82, it is possible to readily perform assembling of the respective parts and to restrict additional parts required for assembling the respective parts to the necessity minimum.

In addition, while the embodiment exemplifies a scooter type motorcycle as a motorcycle, the teaching of the present invention is not limited to a scooter type one but applicable to other motorcycles. Also, "motorcycle" referred to in the specification of the present application means a motorcycle including a bicycle with a prime mover (motorbicycle) and a scooter, and specifically means a vehicle capable of turning while a vehicle body inclines. Accordingly, even a three-wheeler, a four-wheeler (or more) in terms of the number of tires, in which one of a front wheel and a rear wheel includes two or more wheels, can be included in "motorcycle" referred to in the specification of the present application. Furthermore, the teaching of the present invention is not limited to a motorcycle but applicable to other vehicles capable of making use of an effect of the invention, for example, a so-called saddle-ride type vehicle including a four-wheel buggy (ATV: All-Terrain Vehicle) and a snowmobile other than a motorcycle.

The description above discloses (amongst others) a vehicle power unit comprising a continuously variable transmission including a primary sheave mounted on a primary shaft, into which output of an engine is input, a secondary sheave mounted on a secondary shaft, from which a drive force is taken out, and a transmission belt wound around the primary sheave and the secondary sheave, and a wound diameter control mechanism that converts torque from an actuator into an axially moving force of the moving sheave, which constitutes the primary sheave, to vary a belt wound diameter of the primary sheave, wherein the wound diameter control mechanism comprises a slide cylindrical body mounted on the moving sheave of the primary sheave and supported slidably on the primary shaft, a moving side feed screw member supported rotatably on the slide cylindrical body with a first bearing therebetween, a stationary side feed screw member meshing with the moving side feed screw member and latched on a transmission casing body, and a second bearing arranged between the stationary side feed screw member and the primary shaft, and the second bearing is arranged to axially overlap an opposite end of the slide cylindrical body to the moving sheave when the moving sheave is disposed in a low position.

According to the power unit, since the second bearing is arranged to axially overlap an opposite end of the slide cylindrical body to the moving sheave when the moving sheave is disposed in a low position, it is possible to move the slide cylindrical body to a position, in which it overlaps the second bearing, and thus it is possible to correspondingly decrease an axial length of the primary shaft to decrease a width dimension of the whole power unit. Consequently, it is possible to ensure a bank angle and a foot putting quality when the power unit is mounted on, for example, a motorcycle.

The description above discloses, as a particularly preferred embodiment, in order to provide a vehicle power unit, a primary shaft of which can be decreased in axial length, a vehicle power unit comprising a slide cylindrical body 80 mounted on a moving sheave 49 of a primary sheave 40 and supported slidably on a primary shaft portion 17b, a moving side feed screw member 82 supported rotatably through a first bearing 81 by the slide cylindrical body 80, a stationary side feed screw member 83 meshing with the moving side feed screw member 82 and latched on a transmission casing 25, and a second bearing 84 arranged between the stationary side feed screw member 83 and the primary shaft portion 17b, and the second bearing 84 is arranged so as to axially overlap an opposite end 80a of the slide cylindrical body 80 to the moving sheave when the moving sheave 49 is disposed in a low position.

The description above discloses, as a first aspect, a vehicle power unit comprising a continuously variable transmission including a primary sheave mounted on a primary shaft, into which output of an engine is input, a secondary sheave mounted on a secondary shaft, from which a drive force is taken out, and a transmission belt wound around the primary sheave and the secondary sheave, and a wound diameter control mechanism that converts torque from an actuator into an axially moving force of the moving sheave, which constitutes the primary sheave, to vary a belt wound diameter of the primary sheave, wherein the wound diameter control mechanism comprises a slide cylindrical body mounted on the moving sheave of the primary sheave and supported slidably on the primary shaft, a moving side feed screw member supported rotatably on the slide cylindrical body with a first bearing therebeween, a stationary side feed screw member meshing with the moving side feed screw member and latched on a transmission casing body, and a second bearing arranged between the stationary side feed screw member and the primary shaft, and the second bearing is arranged to axially overlap an opposite end of the slide cylindrical body to the moving sheave when the moving sheave is disposed in a low position.

As a second aspect, in the vehicle power unit according to the first aspect, the second bearing is supported on the primary shaft with a bearing support member therebetween, the bearing support member comprises a cylindrical-shaped holding portion, which holds the second bearing, and a flange portion, which defines a bottom wall of the holding portion, the holding portion axially overlaps an opposite end of the slide cylindrical body to the moving sheave, and the flange portion is supported by the primary shaft.

As a third aspect, in the vehicle power unit according to the second aspect, the flange portion is interposed between a step formed on the primary shaft portion and a collar member, which is arranged between the primary shaft portion and the slide cylindrical body.

As a fourth aspect, in the vehicle power unit according to the second or third aspect, the flange portion of the bearing support member is press fitted onto and joined to the step.

As a fifth aspect, in the vehicle power unit according to the first aspect, the moving side feed screw member has an inner peripheral surface of a cylindrical body thereof supported by the first bearing and is formed on an outer peripheral surface thereof with male threads, and at least a part of the male threads axially overlaps the first bearing.

As a sixth aspect, in the vehicle power unit according to fifth aspect, a sheave side gear, to which torque from the actuator is transmitted, is press fitted onto and joined to a portion of the moving side feed screw member adjacent to the male threads and the sheave side gear axially overlaps at least a part of the male threads.

The description above discloses, as a seventh aspect, a vehicle power unit comprising a continuously variable transmission including a primary sheave mounted on a primary shaft, into which output of an engine is input, a secondary sheave mounted on a secondary shaft, from which a drive force is taken out, and a transmission belt wound around the primary sheave and the secondary sheave, and a wound diameter control mechanism that converts torque from an actuator into an axially moving force of the moving sheave, which constitutes the primary sheave, to vary a belt wound diameter of the primary sheave, wherein the wound diameter control mechanism comprises a slide cylindrical body mounted on the moving sheave of the primary sheave and supported slidably on the primary shaft, a moving side feed screw member supported rotatably on the slide cylindrical body with a first bearing therebeween, a stationary side feed screw member meshing with the moving side feed screw member and latched on a transmission casing body, the moving side feed screw member has an inner peripheral surface of a cylindrical body thereof supported by the first bearing and is formed on an outer peripheral surface thereof with male threads, and at least a part of the male threads axially overlaps the first bearing.

The vehicle power unit according to an eight aspect, in the vehicle power unit according to the seventh aspect mentioned above, comprises a sheave side gear, to which torque from the actuator is transmitted, is press fitted onto and joined to a portion of the moving side feed screw member adjacent to the male threads and the sheave side gear axially overlaps at least a part of the male threads.

As a ninth aspect, there is disclosed a vehicle which the power unit according to any one of the aspects mentioned above is mounted.

## Claims

1. Vehicle power unit comprising a belt-type continuously variable transmission having a mechanism to control a belt wound diameter, said mechanism comprising a slide cylindrical body (80) supported slidably on a primary shaft (17b), a moving side feed screw member (82) supported rotatably through a first bearing (81) by the slide cylindrical body (80), a stationary side feed screw member (83) meshing with the moving side feed screw member (82) and latched on a transmission casing (25), and a second bearing (84) arranged between the stationary side feed screw member (83) and the primary shaft (17b) to provide a space (a) therebetween, into which the slide cylindrical body (80) can enter in a low position of a moving sheave member (49) of a primary sheave (40),
**characterized in that**
the slide cylindrical body (80) is mounted on the moving sheave member (49),
the second bearing (84) is supported on the primary shaft (17b) with a bearing support member (90) therebetween, and
the bearing support member (90) comprises a cylindrical-shaped holding portion (90a), which holds the second bearing (84), and a flange portion (90b), which defines a bottom wall of the holding portion (90a), and wherein the holding portion (90a) axially overlaps an end of the slide cylindrical body (80) opposite to the moving sheave member (49) when the moving sheave member (49) is disposed in the low position, and wherein the flange portion (90b) is supported by the primary shaft (17b).

2. Vehicle power unit according to claim 1, wherein the second bearing (84) is arranged so as to axially overlap the end (80a) of the slide cylindrical body (80) opposite to the moving sheave member (49), when the moving sheave member (49) is disposed in the low position.

3. Vehicle power unit according to claim 1 or 2, wherein the continuously variable transmission comprises the primary sheave (40) mounted on the primary shaft (17b), into which output of an engine is input, a secondary sheave (42) mounted on a secondary shaft (41), from which a drive force is taken out, and a transmission belt (43) wound around the primary sheave (40) and the secondary sheave (42), wherein the belt wound diameter control mechanism is configured to convert torque from an actuator (60) into an axially moving force of the moving sheave member (49), which constitutes part of the primary sheave (40), to vary the belt wound diameter of the primary sheave (40).

4. Vehicle power unit according to one of the claims 1 to 3, wherein the flange portion (90b) is interposed between a step (17d) formed on the primary shaft (17b) and a collar member (48), which is arranged between the primary shaft (17b) and the slide cylindrical body (80).

5. Vehicle power unit according to claim 4, wherein the flange portion (90b) of the bearing support member (90) is press fitted onto and joined to the step (17d).

6. Vehicle power unit according to one of the claims 1 to 5, wherein the moving side feed screw member (82) has an inner peripheral surface of a cylindrical body thereof supported by the first bearing (81) and is formed on an outer peripheral surface thereof with male threads, and at least a part of the male threads axially overlaps the first bearing (81).

7. Vehicle power unit according to claim 6 when dependent upon claim 3, wherein a sheave side gear (61), to which torque from the actuator (60) is transmitted, is press fitted onto and joined to a portion of the moving side feed screw member (82) adjacent to the male threads and the sheave side gear (61) axially overlaps at least a part of the male threads.

8. Vehicle comprising a power unit according to the features of any one of the claims 1 to 7.

## Patentansprüche

1. Fahrzeugantriebseinheit, umfassend ein stufenloses Riemen-Automatikgetriebe, das einen Mechanismus hat, um einen Riemenwickeldurchmesser zu steuern, wobei der Mechanismus umfasst: einen zylindrischen Gleitkörper (80), der gleitfähig auf einer Primärwelle (17b) gelagert ist, ein bewegungsseitiges Spindelelement (82), das durch ein erstes Lager (81) durch den zylindrischen Gleitkörper (80) drehbar gelagert ist, ein Spindelelement (83) einer stationären Seite, das in das bewegungsseitige Spindelelement (82) eingreift und an einem Getriebegehäuse (25) arretiert ist, und ein zweites Lager (84), das zwischen dem Spindelelement (83) der stationären Seite und der Primärwelle (17b) angeordnet ist, um dazwischen einen Zwischenraum (a) vorzusehen, in den der zylindrische Gleitkörper (80) in einer unteren Position eines sich bewegenden Treibscheibenelementes (49) einer Primärtreibscheibe (40) eintreten kann,
**dadurch gekennzeichnet, dass**
der zylindrische Gleitkörper (80) an dem sich bewegenden Treibscheibenelement (49) angebracht ist,
das zweite Lager (84) auf der Primärwelle (17b) mit einem dazwischen befindlichen Lagerträgerelement (90) gehalten ist und
das Lagerträgerelement (90) einen zylinderförmigen Halteabschnitt (90a), der das zweite Lager (84) hält, und einen Flanschabschnitt (90b) umfasst, der eine Bodenwand des Halteabschnittes (90a) bildet, wobei der Halteabschnitt (90a) ein Ende des zylindrischen Gleitkörpers (80) gegenüberliegend dem sich bewegenden Treibscheibenelement (49) axial überlappt, wenn das sich bewegende Treibscheibenelement (49) in der unteren Position angeordnet ist, und der Flanschabschnitt (90b) von der Primärwelle (17b) gehalten ist.

2. Fahrzeugantriebseinheit nach Anspruch 1, bei der das zweite Lager (84) derart angeordnet ist, dass es das Ende (80a) des zylindrischen Gleitkörpers (80) gegenüberliegend dem sich bewegenden Treibscheibenelement (49) axial überlappt, wenn das sich bewegende Treibscheibenelement (49) in der unteren Position angeordnet ist.

3. Fahrzeugantriebseinheit nach Anspruch 1 oder 2, bei der das stufenlose Automatikgetriebe umfasst: die Primärtreibscheibe (40), die auf der Primärwelle (17b) angebracht ist, der die Antriebskraft der Maschine zugeführt wird, eine Sekundärtreibscheibe (42), die auf einer Sekundärwelle (41) angebracht ist, von der eine Antriebskraft ausgeht, und einen Übersetzungsriemen (43), der um die Primärtreibscheibe (40) und die Sekundärtreibscheibe (42) gewickelt ist, wobei der Riemenwickeldurchmesser-Steuermechanismus dazu eingerichtet ist, ein Drehmoment von einem Stellantrieb (60) in eine axiale Bewegungskraft des sich bewegenden Treibscheibenelementes (49) umzuwandeln, die einen Teil der Primärtreibscheibe (40) bildet, um den Riemenwickeldurchmesser der Primärtreibscheibe (40) zu verändern.

4. Fahrzeugantriebseinheit nach einem der Ansprüche 1 bis 3, bei der der Flanschabschnitt (90b) zwischen einer Abstufung (17d), die auf der Primärwelle (17b) ausgebildet ist, und einem Ringelement (48) angeordnet ist, das zwischen der Primärwelle (17b) und dem zylindrischen Gleitkörper (80) angeordnet ist.

5. Fahrzeugantriebseinheit nach Anspruch 4, bei der der Flanschabschnitt (90b) des Lagerträgerelementes (90) auf der Abstufung (17d) durch Presspassung angebracht und mit dieser verbunden ist.

6. Fahrzeugantriebseinheit nach einem der Ansprüche 1 bis 5, bei dem das bewegungsseitige Spindelelement (82) eine Innenumfangsfläche eines zylindrischen Körpers derselben hat, der von dem ersten Lager (81) gehalten ist und auf einer Außenoberfläche desselben mit einem Außengewinde versehen ist, wobei wenigstens ein Teil des Außengewindes das erste Lager (81) axial überlappt.

7. Fahrzeugantriebseinheit nach Anspruch 6, bei der bei Abhängigkeit von Anspruch 3 ein treibscheibenseitiges Zahnrad (61), auf das ein Drehmoment von dem Stellantrieb (60) übertragen wird, durch Presspassung auf einem Abschnitt des bewegungsseitigen Spindelelementes (82) benachbart dem Außengewinde angebracht und mit diesem verbunden ist und das treibscheibenseitige Zahnrad (61) wenigstens einen Teil des Außengewindes axial überlappt.

8. Fahrzeug, umfassend eine Antriebseinheit gemäß den Merkmalen nach einem der Ansprüche 1 bis 7.

## Revendications

1. Unité génératrice de véhicule comprenant une transmission variable en continu de type courroie comportant un mécanisme pour contrôler un diamètre d'enroulement de courroie, ledit mécanisme comprenant un corps cylindrique coulissant (80) supporté de manière coulissante sur un arbre primaire (17b), un élément de vis d'alimentation du côté mobile (82) supporté de manière rotative via un premier palier (81) par le corps cylindrique coulissant (80), un élément de vis d'alimentation du côté stationnaire (83) qui s'engrène avec l'élément de vis d'alimentation du côté mobile (82) et est verrouillé sur un boîtier de transmission (25), et un deuxième palier (84) agencé entre l'élément de vis d'alimentation du côté stationnaire (83) et l'arbre primaire (17b) pour procurer entre eux un espace (a), dans lequel le corps cylindrique coulissant (80) peut entrer en position basse d'un élément de poulie mobile (49) d'une poulie primaire (40),
**caractérisée en ce que**
le corps cylindrique coulissant (80) est monté sur l'élément de poulie mobile (49),
le deuxième palier (84) est supporté sur l'arbre primaire (17b) avec un élément de support de palier (90) entre eux, et
l'élément de support de palier (90) comprend une partie de maintien de forme cylindrique (90a) qui maintient le deuxième palier (84), et une partie de bride (90b) qui définit une paroi inférieure de la partie de maintien (90a), et dans laquelle la partie de maintien (90a) recouvre axialement une extrémité du corps cylindrique coulissant (80) opposée à l'élément de poulie mobile (49) quand l'élément de poulie mobile (49) se trouve en position basse, et dans laquelle la partie de bride (90b) est supportée par l'arbre primaire (17b).

2. Unité génératrice de véhicule selon la revendication 1, dans laquelle le deuxième palier (84) est agencé de manière à recouvrir axialement l'extrémité (80a) du corps cylindrique coulissant (80) opposée à l'élément de poulie mobile (49) quand l'élément de poulie mobile (49) se trouve en position basse.

3. Unité génératrice de véhicule selon la revendication 1 ou 2, dans laquelle la transmission variable en continu comprend la poulie primaire (40) montée sur l'arbre primaire (17b) sur laquelle est entrée la sortie d'un moteur, une poulie secondaire (42) montée sur un arbre secondaire (41) dont une force d'entraînement est prélevée, et une courroie de transmission (43) enroulée sur la poulie primaire (40) et la poulie secondaire (42), dans laquelle le mécanisme de contrôle du diamètre d'enroulement de courroie est configuré pour convertir le couple d'un actionneur (60) en une force de déplacement axiale de l'élément de poulie mobile (49), qui constitue une partie de la poulie primaire (40), pour faire varier le diamètre d'enroulement de courroie de la poulie primaire (40).

4. Unité génératrice de véhicule selon l'une des revendications 1 à 3, dans laquelle la partie de bride (90b) est interposée entre un épaulement (17d) formé sur l'arbre primaire (17b) et un élément de collier (48), qui est agencé entre l'arbre primaire (17b) et le corps cylindrique coulissant (80).

5. Unité génératrice de véhicule selon la revendication 4, dans laquelle la partie de bride (90b) de l'élément de support de palier (90) est sertie sur l'épaulement (17d) et assemblée à celui-ci.

6. Unité génératrice de véhicule selon l'une des revendications 1 à 5, dans laquelle l'élément de vis d'alimentation du côté mobile (82) présente une surface périphérique interne d'un corps cylindrique de celui-ci supportée par le premier palier (81) et formée sur une surface périphérique externe de celui-ci avec des filetages mâles, et au moins une partie des filetages mâles recouvre axialement le premier palier (81).

7. Unité génératrice de véhicule selon la revendication 6 lorsqu'elle dépend de la revendication 3, dans laquelle un engrenage côté poulie (61), auquel est transmis un couple provenant de l'actionneur (60), est serti sur une partie de l'élément de vis d'alimentation du côté mobile (82) adjacente aux filetages mâles et assemblé à celle-ci, et l'engrenage côté poulie (61) recouvre axialement au moins une partie des filetages mâles.

8. Véhicule comprenant une unité génératrice selon les caractéristiques de l'une quelconque des revendications 1 à 7.
